# EUROPÄISCHE PATENTSCHRIFT

(11) **EP 0 593 026 B1**
(45) Veröffentlichungstag und Bekanntmachung des Hinweises auf die Patenterteilung: **14.08.1996**
(21) Anmeldenummer: 93116532.8
(22) Anmeldetag: 13.10.1993
(51) Int. Cl.: G01N 1/20

(54) **Probeentnahmevorrichtung**
Sampling device
Dispositif d'échantillonnage

(30) Priorität: 15.10.1992 DE 4234814
(43) Veröffentlichungstag der Anmeldung: 20.04.1994
(73) Patentinhaber: GARLOCK GMBH GESCHÄFTSBEREICH ARMATUREN, D-41468 Neuss (DE)
(72) Erfinder: Warlich, Lutz P., D-40235 Düsseldorf (DE); Werner, Manfred, D-58285 Gevelsberg (DE)
(74) Vertreter: König, Reimar, Dr.-Ing.

(56) Entgegenhaltungen:
- EP-A- 0 440 023
- DE-A- 3 043 836
- DE-A- 3 546 354
- PATENT ABSTRACTS OF JAPAN vol. 4, no. 62 (P-10)9. Mai 1980 & JP-A-55 031 943 (TOSHIBA) 6. März 1980

## Beschreibung

Die Erfindung betrifft eine Probeentnahmevorrichtung aus einer in einer Rohrleitung oder einer Behälterwand angeordneten Ventileinheit und einer damit verbundenen Aufnahmeeinheit.

Derartige Vorrichtungen dienen der Entnahme von Proben aus Rohrleitungen von Produktkreisläufen großtechnischer Chemieanlagen kleinster bis größter Durchmesser, aber auch der Entnahme von Proben aus mobilen Behälterfahrzeugen, wie Kesselwagen und Gefahrgutcontainern, in denen sich flüssige oder gasförmige Stoffe unter Über- oder Unterdruck befinden. Bei derartigen Probenahmevorrichtungen soll die Probe vollständig in die Aufnahmeeinheit gelangen, ohne daß durch Undichtigkeiten oder Toträume zwischen der Ventileinheit und der Aufnahmeeinheit Probereste in die Umwelt gelangen. Bei der Handhabung der Probenahmevorrichtung soll eine Gefährdung der Bedienungspersonen ausgeschlossen sein.

Bei einer Probenahmevorrichtung, die in der europäischen Patentanmeldung 0 440 023 beschrieben ist, läßt sich die Aufnahmeeinheit mit der Ventileinheit mittels eines Bajonettverschlusses verbinden. Die Ventileinheit ist in Schließrichtung federbelastet und öffnet nach innen. Die Aufnahmeeinheit ist in Schließrichtung federbelastet und öffnet nach außen. Die Ventileinheit und die Aufnahmeeinheit sind im verbundenen Zustand mittels Kugelkalotten anliegend aufeinander angeordnet. Die Ventileinheit besteht aus einem massiven Aufnahmeflansch, der zwischen entsprechenden Flanschen in einer Rohrleitung druckdicht eingesetzt ist. Dieser Aufnahmeflansch ist quer zur Produktströmung zweimal durchbrochen. Der eine Durchbruch dient zur Aufnahme einer federbelasteten Ventilspindel, die den Produktstrom durchquert und einen Ventilkopf an ihrem Ende trägt, der auf einem gegenüberliegenden Ventilsitz ruht, der den anderen Durchbruch im Aufnahmeflansch bildet. Die Ventilspindel befindet sich ständig im Produktstrom. Die den Ventilkopf schließende Druckfeder ist in einer Ausnehmung des Aufnahmeflanschs angeordnet und durch einen Faltenbalg gegen die Einwirkung des Produkts gesichert. Die Ausnehmung im Aufnahmeflansch ist nach außen durch einen aufgeschraubten Deckel geschlossen.

Die Notwendigkeit, zwei Durchbrüche im Aufnahmeflansch vorsehen zu müssen, führt dazu, daß für jeden Durchbruch eine kostenaufwendige Konstruktion erforderlich ist. Für die Probeentnahme ist ein Bajonettverschluß zum Verbinden der Aufnahmeeinheit mit der Ventileinheit und für die federbelastete Ventilspindel sind störanfällige Konstruktionselemente, wie Faltenbalg, Druckfeder und Deckelverschlußschrauben vorzusehen. Wegen des damit verbundenen Raumbedarfs werden die Einbaumöglichkeiten stark eingeschränkt, da bei Wartungsarbeiten an der Druckfeder oder dem Faltenbalg genügend Montageraum zur Verfügung stehen muß. Außerdem bedeutet jeder Durchbruch in Systemen mit Druckdifferenzen immer Emission, d.h. Austritt zum Teil toxischer Stoffe.

Nachteilig ist bei dieser Vorrichtung, daß sich die Ventilspindel vollständig im Produktstrom befindet, wodurch sich der Durchflußwiderstand und damit die erforderliche Pumpleistung erhöhen. Des weiteren können sich zur Kristallisation neigende Produkte an der Ventilspindel anlagern und den verbleibenden Restquerschnitt bis zum vollständigen Verschließen verkleinern. Die Kristalle können sich auch in der Ventilschaftführung anlagern und die freie Beweglichkeit des Ventilschafts behindern. Da der Ventilkopf über den Ventilschaft nur federbelastet geschlossen gehalten wird, ist die Dichtwirkung unsicher und nimmt bei Federermüdung allmählich, jedoch auf nicht vorhersehbare Weise ab. Dies kann besonders bei toxischen Produkten zu einer erheblichen Umweltbelastung durch Tropfenbildung führen. Des weiteren kann die Dichtwirkung durch Kristallablagerungen auf dem Ventilsitz beeinträchtigt werden, da der Ventilkopf ausschließlich durch Federkraft auf seinen Sitz gedrückt wird und diese Federkraft unter Umständen nicht ausreicht, um die Kristalle zu zerdrücken.

Durch das strömende Medium wirken auf die Ventilspindel erhebliche Querkräfte, die zu Verkantungen in der einseitigen Führung der Ventilspindel führen können, was ebenfalls die Wirksamkeit der Abdichtung beeinträchtigen kann, besonders bei großen Rohrdurchmessern. Aus diesem Grunde wird die bekannte Probenahmevorrichtung häufig in einem Beipaß zu der Produktleitung angeordnet, wodurch sich der Aufwand für die Installation einer solchen Probenahmevorrichtung erhöht.

Die Aufnahmeeinheit weist ein Entnahmerohr auf, in dem ein Ventilkegel axial verschiebbar angeordnet ist und mit der Kugelkalotte an dem Ventilkopf anliegt. Zur Probenahme wird der Ventilkegel mittels eines Handhebels gegen den Druck einer Schließfeder für den Ventilkegel und der Schließfeder für den Ventilkopf im Aufnahmeflansch aus seiner Dichtstellung angehoben, gleichzeitig die Probenahmebohrung freigesetzt. Bei Überdruck strömt das Produkt dukt über diese Bohrung in ein Entnahmegefäß mit darin angeordnetem Kolben und nach außen geführter Kolbenstange mit einer Handhabe. Da sich das Öffnen des Ventils durch den Handhebel wegen der großen Hebelübersetzung nur ungenau kontrollieren läßt, kann es bei Überdruck in der Produktleitung zu einer sehr starken Einströmung und so zu Einströmturbulenzen und eventuellem Schäumen kommen, wodurch sich die Probe gegenüber dem ursprünglichen Produktstrom verändern kann. Des weiteren kann es auch durch Druckstöße zu einer Zerstörung des Entnahmegefäßes und zum Freisetzen toxischer Stoffe kommen.

Schließlich ist auch noch nachteilig, daß bei erfolgter Probenahme unmittelbar nach dem Trennen der Aufnahmeeinheit von der Ventileinheit ein Tropfen des Probemediums in die konkave Kugelkalotte der Endfläche des Verschlußkopfes gelangt und nach vollständiger Entnahme der Aufnahmeeinheit die Umgebung belastet. Dies ist möglich, da zum gleichen Zeitpunkt der Produktraum geschlossen und die Trennung der Kalotten vollzogen wird. Kapillarkräfte saugen dabei Produktreste aus dem Dichtungsbereich der Hauptabsperrung.

Der Erfindung liegt die Aufgabe zugrunde, eine Probenahmevorrichtung zu schaffen, die sich in Rohrleitungen beliebigen Durchmessers oder einer Behälterwand anordnen läßt, keine übermäßigen Strömungswiderstände hervorruft, eine sichere Dichtwirkung auch zum Auskristallisieren neigenden Produkten gewährleistet, geringen Fertigungsaufwand erfordert, bei einfachem Aufbau eine sichere Handhabung bei minimalen Emissionen an die Umwelt erlaubt.

Zur Lösung dieser Aufgabe dient eine Probenahmevorrichtung gemäß Anspruch 1.

Dieser Aufbau erfordert nur einen Durchbruch in der Rohrleitungs- und/oder Behälterwand. Damit werden der Herstellungsaufwand und die mögliche Emission an die Umwelt halbiert. Durch den Wegfall des zweiten Durchbruchs in der Rohrleitungs- oder Behälterwand sind Einbaubeschränkungen durch zusätzliche Montageräume nicht mehr gegeben.

Da das Kegelsitzventil in der Ventilsitzbuchse durch den hohlen Ventilschaft geführt wird, läßt sich die Probenahmevorrichtung an beliebiger Stelle in einer Rohrleitung oder einer Behälterwand anordnen, ohne daß dadurch der Strömungswiderstand erhöht wird oder das Auskristallisieren begünstigende Vorsprünge in den Produktstrom ragen.

Befindet sich bevorzugterweise zwischen dem Schaft des Kegelsitzventils und der Ventilsitzbuchse eine Gewindeverbindung und wird das Drehen des Schafts des Kegelsitzventils zum Öffnen und Schließen durch eine drehfeste Kupplung zwischen dem Schaft des Kegelsitzventils und der Aufnahmeeinheit bewirkt, ist die Schließkraft des Kegelsitzventils nur von der Kraft abhängig, mit der das Kegelsitzventil über die Gewindeverbindung auf seinen Sitz geschraubt wird. Durch das damit verbundene Drehen des Kegelsitzventils werden etwaige, am Kegelsitzventil oder der Sitzfläche der Ventilsitzbuchse befindliche Kristalle zerrieben, so daß stets eine einwandfreie Dichtung gewährleistet ist. Die Kupplung zwischen dem Schaft des Kegelsitzventils und der Aufnahmeeinheit kann aus einer in Schließrichtung wirkenden Biegefederverbindung bestehen, die das Kegelsitzventil stets in der geschlossenen Stellung hält. Diese Biegefederverbindung liegt außerhalb der Ventileinheit und kommt mit dem als Probe zu entnehmenden Produkt nicht in Berührung, so daß keine negative Beeinflussung der Schließkraft eintreten kann.

Um das Kegelsitzventil durch Drehen der Aufnahmeeinheit zu öffnen und zu schließen, empfiehlt sich eine in einem am Schaft des Kegelsitzventils drehfest angeordneten Gehäuse angeordnete, mit einem Ende an der Ventilsitzbuchse und mit dem anderen Ende an dem Gehäuse befestigte, räumliche gebundene Biegefeder und ein auf das Federgehäuse aufsteckbares und verrastbares Gehäuseende der Aufnahmeeinheit. Vorzugsweise kann dabei am Gehäuseende eine federbeaufschlagte Rastklinke und am Federgehäuse eine Rastausnehmung axial versetzt so angeordnet sein, daß das Einrasten erst erfolgt, wenn das Entnahmerohr im Kegelsitzventil an einem Anschlag dichtend anliegt und ein im Entnahmerohr angeordneter Steuerkolben durch axiales Verschieben des Aufnahmeteils in eine Öffnung im Entnahmekopf freigebende Stellung gebracht ist. Auf diese Weise ist die Sicherheit gegeben, daß nur dann durch das Einrasten der Rastklinke im Federgehäuse ein Öffnen des Kegelsitzventils durch Drehen der Aufnahmeeinheit möglich ist, wenn die Aufnahmeeinheit abgedichtet mit der Ventileinheit verbunden und eine Verbindung zu einem Entnahmegefäß hergestellt ist. Da sich das Kegelsitzventil durch langsames Drehen dann sehr vorsichtig öffnen läßt, ist es möglich, den Zustrom des als Probe zu entnehmenden Produkts in das Entnahmegefäß leicht so zu steuern, daß weder Druckstöße noch Verwirbelungen eintreten.

Am Umfang des Entnahmegefäßes können Sichtfenster angeordnet sein, die beim Drehen der Aufnahmeeinheit nacheinander erscheinen und eine visuelle Beurteilung des gesamten Probevolumens ermöglichen. Eine nicht brauchbar erscheinende Probe kann sofort in den Produktstrom zurückgedrückt werden. Zusätzliche Laborwege und damit Emissionen durch Benetzungsflächen werden vermieden.

Eine weitere Sicherung gegen ein unabsichtliches Ausrasten der Rastklinke läßt sich dadurch erreichen, daß die Ventilsitzbuchse einen zylindrischen Sicherungskragen mit einem gegenüber dem Außendurchmesser des zylindrischen Gehäuseendes geringfügig größeren Innendurchmessers aufweist und im Sicherungskragen eine Axialnut oder ein Axialschlitz zur Aufnahme der Rastklinke vor dem Einrasten in die Rastausnehmung am Federgehäuse angeordnet ist. Die Aufnahmeeinheit läßt sich auf diese Weise mit der Ventileinheit nur dann kuppeln, wenn die Rastklinke in den Axialschlitz des Sicherungskragens gleiten kann, bis sie in die Rastausnehmung am Federgehäuse einrastet. Wird die Aufnahmeeinheit jetzt gedreht, wird die Rastklinke dadurch in Sicherungskragen daran gehindert, wieder auszurasten, selbst wenn versucht wird, die Rastklinke von Hand zu betätigen.

Vorzugsweise kann das Entnahmerohr gegen die Wirkung einer Feder axial verschiebbar an der Aufnahmeeinheit angeordnet sein, einen als Widerlager für die Feder dienenden Flansch und am Gehäuse eine den Flansch in der ausgefahrenen Ruhestellung des Entnahmerohrs hintergreifende, federbeaufschlagte Sicherheitsklinke aufweisen. Diese Sicherheitsklinke verhindert, daß das Entnahmerohr unabsichtlich axial verschoben wird, z. B. wenn es mit einer Probe gefüllt ist, so daß auch kein Probematerial unabsichtlich aus der Aufnahmeeinheit austreten kann. Eine weitere Sicherung gegen ein unabsichtliches Öffnen des Kegelsitzventils kann aus einem an der Ventilsitzbuchse angeordneten, federbeaufschlagten Sicherheitsriegel bestehen, der verhindert, daß sich das Kegelsitzventil unabsichtlich öffnet. Im einzelnen kann die Ventileinheit aus einer in eine Rohrleitung oder in eine Behälterwand abgedichtet eingeschraubten Ventilsitzbuchse mit einem kegeligen Ventilsitz, einem sich daran anschließenden zylindrischen Führungsbereich sowie einem Gewindebereich und einem an einer Anflachung der Rohrleitung oder des Behälters anliegenden Flansch mit einem zylindrischen Sicherheitskragen, einem mit einem hohlen Schaft im zylindrischen Führungsbereich geführten und im Gewindebereich eingeschraubten Kegelsitzventil mit an eine kegelige Sitzfläche des Kegelsitzventils angrenzende, in den hohlen Schaft mündenden Radialöffnungen und einem mit dem Schaft drehfest verbundenen, mit Abstand von dem Flansch angeordneten Federgehäuse für eine mit einem Ende an der Ventilsitzbuchse und mit dem anderen Ende am Federgehäuse befestigten, räumlich gewundenen Biegefeder bestehen. Dabei kann ein federbeaufschlagter Sicherheitsriegel mit einer in den Zwischenraum zwischen dem Federgehäuse und dem Flansch ragenden Sperrklinke und einem von außen erreichbaren Betätigungshebel im Bereich des Sicherungskragens am Flansch angeordnet sein.

Die Aufnahmeeinheit besteht vorzugsweise aus einem im wesentlichen zylindrischen Gehäuse, dessen eines Ende sich auf das Federgehäuse aufschieben läßt und in dessen anderes Ende eine zylindrische Buchse in einer abgedichteten Führung für das federbeaufschlagte axial verschiebbare Entnahmerohr geschraubt ist. Der Weg des Entnahmerohrs ist dann durch eine Anschlagfläche für einen Flansch am Ende des Entnahmerohrs in einer Vertiefung der Buchse und durch eine in die Vertiefung eingeschraubte, durchbohrte Kappe begrenzt, und an der Kappe ist eine den Steuerkolben im Bereich des Entnahmekopfs haltende Kolbenstange befestigt, während sich das Entnahmerohr in einer zylindrischen mit dem Entnahmerohr in Verbindung stehenden Entnahmegefäß mit daran angeordnetem Kolben und nach außen geführter Kolbenstange mit einer Handhabe fortsetzt. An diesem Gehäuse kann ein Handrad mittels Speichen befestigt sein; die federbeaufschlagte Rastklinke ist in einem Gehäuseschlitz gelagert, und ein dazu im wesentlichen rechtwinklig radial abstehender Betätigungshebel ragt in den Bereich des Handrads.

Mittels des Handrades wird die Aufnahmeeinheit gedreht, um das Kegelsitzventil zu öffnen. Das Schließen des Kegelsitzventils wird in erster Linie durch die räumlich gewundene Biegefeder bewirkt, jedoch läßt sich mittels des Handrades nachhelfen und insbesondere die Schließkraft am Ende der Fließbewegung erhöhen. Die Federbeaufschlagung des axial gegenüber dem Gehäuse verschiebbaren Entnahmerohrs läßt sich durch eine zwischen der Buchse und dem Flansch angeordnete Druckfeder erreichen, und die den Flansch hintergreifende Sicherheitsklinke kann einen in den Bereich des Handrades ragenden federbeaufschlagten Betätigungshebel aufweisen.

Des weiteren kann das Entnahmerohr einen durchmesserkleineren Entnahmekopf mit Radialbohrungen besitzen; ein durch die Durchmesserverringerung gebildeter Absatz läßt sich dichtend an einen entsprechenden Absatz im Ventilschaft anlegen, und der Steuerkolben ist zwischen einer die Radialbohrungen verschließenden und einer diese freigebenden Stellung axial verschiebbar.

Um die Entnahmeeinheit auf einfache Weise zu reinigen, kann das Entnahmegefäß durch einen Boden mit einer Durchführung für die Kolbenstange verschlossen sein. Der Boden ist dann mittels einer verriegelbaren Überwurfmutter am Entnahmegefäß befestigt.

Die Erfindung wird nachstehend anhand eines in der Zeichnung dargestellten Ausführungsbeispiels des näheren erläutert. In der Zeichnung zeigen:
- Fig. 1: einen Längsschnitt durch eine Ventileinheit mit angesetzter Aufnahmeeinheit vor der Verriegelung und vor dem Öffnen des Kegelsitzventils,
- Fig. 2: eine Ansicht der Aufnahmeeinheit,
- Fig. 3: eine Ansicht der Ventileinheit und
- Fig. 4: eine Schnittansicht der Ventileinheit nach der Linie D - D in Fig. 3.

Die Probenahmevorrichtung besteht aus einer Ventileinheit 1 und einer Aufnahmeeinheit 2. Die Ventileinheit 1 weist einen Ventilflansch 3 auf, der sich in eine Rohrleitung abgedichtet einsetzen läßt. Eine Ventilsitzbuchse 4 ist in den Ventilflansch 3 eingeschraubt, bis ein Flansch 5 an der Ventilsitzbuchse 4 an einer Anflächung 19 des Ventilflanschs 3 anliegt. Der Flansch 5 setzt sich durch einen zylindrischen Sicherheitskragen 6 fort, in dessen Umfang ein Axialschlitz 52 angeordnet ist. Die Höhe des Sicherheitskragens 6 kann, wie gezeichnet, verhältnismäßig gering sein, kann aber auch ein Gehäuseende 33 der Aufnahmeeinheit über die volle Länge umschließen. Die Ventilsitzbuchse 4 ist gegen ein Herausdrehen mittels einer Drehsicherung aus einer durch den Flansch 5 gegen die Anflächung 19 gedrehten Schraube 7 gesichert. Die Dichtung gegen den Innenraum des Ventilflanschs 3 erfolgt durch eine in einem zylindrischen Bereich der Ventilsitzbuchse 4 angeordnete O-Ring-Dichtung 8. Auf der dem Innenraum des Ventilflanschs 3 zugekehrten Seite weist die Ventilsitzbuchse 4 eine kegelige Ventilsitzfläche 9 auf, in die zusätzlich ein Weichdichtring 10 eingelassen ist.

Vom Flansch 5 aus ist eine Gewindebuchse 11 in die Ventilsitzbuchse 4 eingeschraubt, die mittels einer Schraube 12 gegen ein Herausdrehen gesichert ist und ein Innengewinde besitzt.

Ein Kegelsitzventil 13 ruht mit seiner kegeligen Sitzfläche auf der Ventilsitzfläche 9 und der Weichdichtung 10, wodurch eine sichere Abdichtung gewährleistet ist; es weist einen hohlen Schaft 14 auf, der mit einem zylindrischen Teil 15 in einem entsprechenden Teil der Ventilsitzbuchse 4 geführt und mittels einer O-Ring-Dichtung 18 abgedichtet ist. Zwischen dem zylindrischen Teil 15 und dem Kegelsitzventil 13 sind Radialöffnungen 17 angeordnet. Ein sich an den zylindrischen Teil 15 anschließendes Gewinde 16 ist in das Innengewinde der Gewindebuchse 11 eingeschraubt, so daß sich das Kegelsitzventil 13 durch Drehen des Schafts 14 öffnen und schließen läßt. Beim Schließen werden bei zum Auskristallisieren neigenden Produkten bereits gebildete Kristalle zwischen den Dichtflächen zerrieben und zerquetscht, so daß stets eine einwandfreie Abdichtung gewährleistet ist.

Auf das Gewinde 16 des Schafts 14 ist des weiteren ein Federgehäuse 20 aufgeschraubt und unter Einhaltung eines Zwischenraums 26 mittels eines tangentialen Sicherungsstifts 25 gesichert. Das Federgehäuse 20 weist eine ringförmige Federaufnahme 21 auf, in die eine räumlich gewundene Biegefeder 22 eingesetzt ist. Ein axial abgebogenes Ende 23 der Biegefeder 22 ist an der Ventilsitzbuchse 4, und ein anderes axial abgebogenes Ende 24 der Biegefeder 22 ist in der Federaufnahme 21 am Federgehäuse 20 befestigt. Wird das Federgehäuse 20 z. B. im Uhrzeigersinn gedreht, schraubt sich das Gewinde 16 in die Gewindebuchse 11 hinein, so daß das Kegelsitzventil 13 von der kegeligen Ventilsitzfläche 9 abhebt. Gleichzeitig wird die räumlich gewundene Biegefeder 22 gespannt. Dies bedeutet, daß über das Federgehäuse 20 und die räumlich gewundene Biegefeder 22 stets ein Drehmoment in Schließrichtung des Kegelsitzventils 13 wirkt, das das Kegelsitzventil 13, wenn es geöffnet ist, in die Schließstellung bringt und es geschlossen hält.

Um ein unbeabsichtigtes Drehen des Federgehäuses 20 zu verhindern, ist eine Sperrklinke 27 mit einem nach außen ragenden Betätigungshebel 28 in einem Lagerbolzen 30 am Flansch 5 der Ventilsitzbuchse 4 gelagert. Der Betätigungshebel 28 wird mittels einer Feder 29 so beaufschlagt, daß die Sperrklinke 27 in den Zwischenraum 26 zwischen dem Federgehäuse 20 und dem Flansch 5 bewegt wird. Da sich die Sperrklinke 27 somit unter der Wirkung der Feder 29 stets in diesem Zwischenraum 26 befindet, wenn sie nicht mittels des Betätigungshebels 28 aus diesem Zwischenraum 26 herausbewegt wird und dann durch eine Öffnung 31 im Sicherungskragen 6 nach außen tritt, läßt sich das Federgehäuse 20 auch nicht im Sinne eines Öffnens des Kegelsitzventils 13 drehen, da die Sperrklinke 27 eine Verringerung des Zwischenraums 26 durch das Einschrauben des Gewindes 16 des Schafts 14 in die Gewindebuchse 11 verhindert.

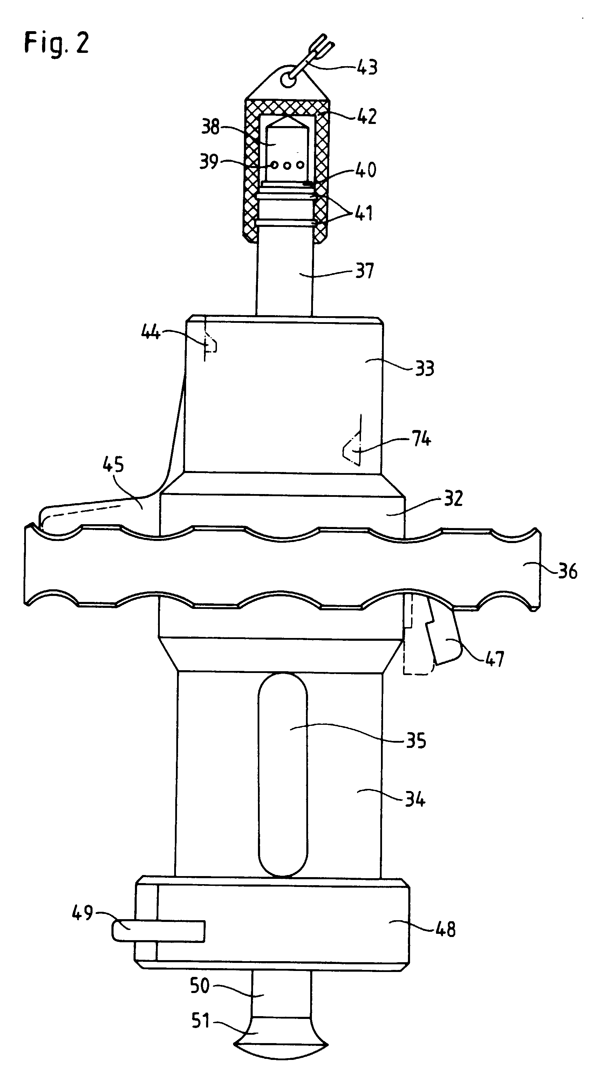

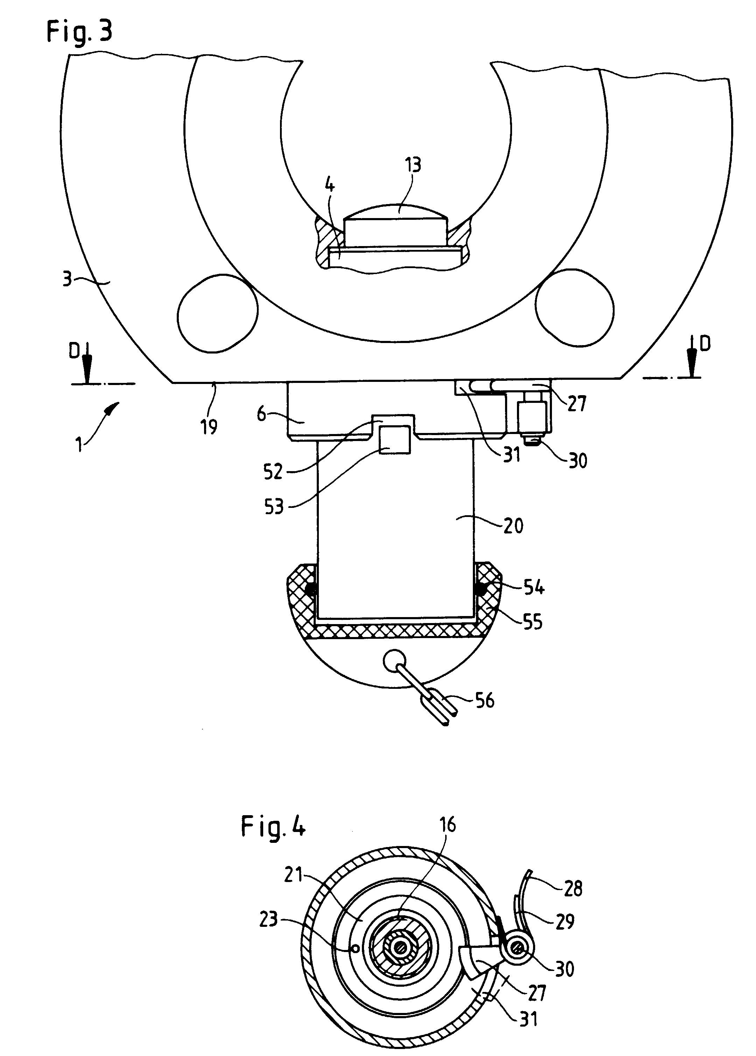

In der Darstellung gemäß Fig. 3 ist das Federgehäuse 20 durch eine Kappe 55 verschlossen, die mittels einer Kette 56 unverlierbar am Ventilflansch 3 befestigt ist. Eine 0-Ring-Dichtung 54 verhindert Benetzungsemissionen. Die zur Probeentnahme mit der Ventileinheit 1 zu verbindende Aufnahmeeinheit 2 besteht aus einem im wesentlichen zylindrischen Gehäuse 32, dessen eines Gehäuseende 33 sich auf das Federgehäuse 20 aufstecken läßt. Das andere Gehäuseende 34 weist ein oder mehrere Fenster 35 auf, durch die der Probeinhalt eines Entnahmegefäßes in Gestalt eines nes Glaszylinders 77 sichtbar ist. Bei der Probenahme dreht sich der Glaszylinder 77, wobei nacheinander die einzelnen Fenster 35 im Blickfeld erscheinen. Die Probe läßt sich unmittelbar nach der Entnahme im druckdicht gekuppelten Zustand der Ventileinheit 1 mit der Aufnahmeeinheit 2 visuell von allen Seiten beurteilen. Unregelmäßigkeiten, wie unzulässige, örtlich hohe Konzentrationen, die durch Schlierenbildung sichtbar werden, sind ohne weiteres erkennbar, da sich die Probe von allen Seiten betrachten läßt. Im mittleren Teil des Gehäuses 32 ist ein Handrad 36 angeordnet, das mit diesem Gehäuse 32 über Speichen 76 verbunden ist. Ein axial verschiebbares Entnahmerohr 37 ragt aus dem Gehäuseende 33 heraus, dessen Entnahmekopf 38 Radialbohrungen 39 für den Durchtritt der Probe besitzt, schließt sich an das Entnahmerohr 37 durchmesservermindert über einen Absatz 82 an, auf den eine Axialdichtung 40 aufgesetzt ist. Am Ende des Entnahmerohrs 37 sind zwei O-Ring-Dichtungen 41 angeordnet. In der Darstellung gemäß Fig. 2 ist der Entnahmekopf 38 durch eine Kappe 42 abgedeckt. Diese Kappe 42 ist über eine Kette 43 unverlierbar mit der Aufnahmeeinheit 3 verbunden.

In einem Schlitz 70 des Gehäuseendes 33 ist ein Rastklinkenarm 71 mit einer Rastklinke 44 angeordnet, die eine Öffnung am Ende des Schlitzes 70 durchdringt. Der Rastklinkenarm 71 ist mit einem dazu etwa rechtwinklig verlaufenden Betätigungshebel 45 verbunden und mittels eines Lagerbolzens 72 im Gehäuse 32 schwenkbar gelagert. Eine Druckfeder 73 sorgt dafür, daß die Rastklinke 44 stets das Bestreben hat, in ihre Raststellung zu gelangen.

Am Gehäuse 32 ist des weiteren eine mit einem Betätigungshebel 47 verbundene Sicherheitsklinke 46 schwenkbar gelagert; sie wird durch eine Feder 75 in Richtung ihrer Verriegelungsstellung beaufschlagt.

Am Gehäuseende 34 ist eine Überwurfmutter 48 angeordnet, die mittels eines Verriegelungshebels 49 gegen ein unbeabsichtigtes Lösen gesichert ist und dazu dient, einen Boden 78 für den Glaszylinder 77 abgedichtet mittels 0-Ring-Dichtung 80 zu halten. Der Boden 78 weist eine Durchführung für eine Kolbenstange 50 mit einer außen liegenden Handhabe 51 auf, die an einem im Glaszylinder 77 abgedichtet geführten Kolben 79 befestigt ist. Der Verriegelungshebel 49 ist an der Überwurfmutter 48 mittels eines Lagerbolzens 81 schwenkbar gelagert.

Das Entnahmerohr 37 ist in einer zylindrischen Buchse 58 axial verschiebbar und mittels einer O-Ring-Dichtung 65 abgedichtet geführt. Diese zylindrische Buchse 58 weist eine Vertiefung 59 auf, in die eine durchbohrte Kappe 60 eingeschraubt ist. Das Entnahmerohr 37 besitzt einen in dieser Vertiefung 59 gehaltenen Flansch 61, dessen Bewegung, die der des Entnahmerohrs 37 entspricht, durch die zylindrische Buchse 58 und die durchbohrte Kappe 60 begrenzt ist.

Eine an der durchbohrten Kappe 60 angeordnete Kolbenstange 62 ist durch das Entnahmerohr 37 bis in den Bereich des Entnahmekopfes 38 geführt. Ein Steuerkolben 63 greift so an der Kolbenstange 62 an, daß in der dargestellten, vorgeschobenen Stellung des Entnahmerohrs 37 die Radialbohrungen 39 durch den Steuerkolben 63 und seine O-Ring-Dichtungen 64 verschlossen sind.

Axiale Ausgleichsbohrungen 65 sind durch den Steuerkolben 63 geführt, um eine ungehinderte Axialbewegung im Entnahmekopf 38 zu ermöglichen.

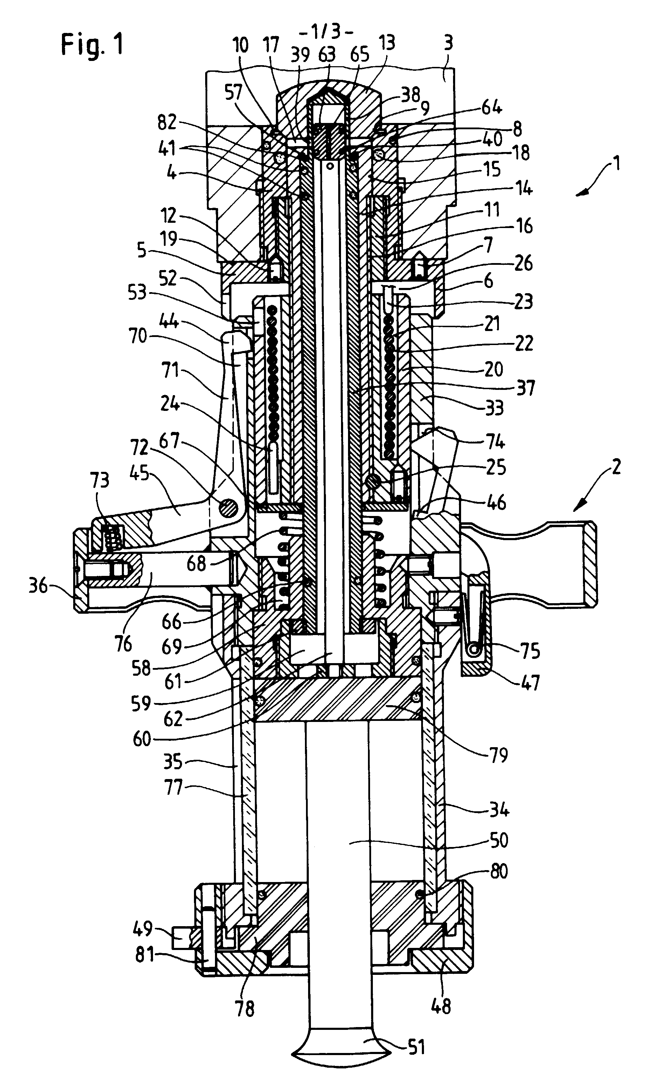

Am Entnahmerohr 37 ist mit Abstand zur zylindrischen Buchse 58 ein Flansch 67 angeordnet, der als Widerlager für eine zwischen dem Flansch 67 und einer Federaufnahme 69 in der zylindrischen Buchse 58 angeordneten Druckfeder 68 dient. Diese Druckfeder 68 zwingt das Entnahmerohr 37 in die in Fig. 1 dargestellte Stellung, in der die Radialbohrungen 39, wie bereits erwähnt, durch den Steuerkolben 63 verschlossen sind.

Beim Entnehmen einer Probe werden die Kappe 55 vom Federgehäuse 20 und die Kappe 42 vom Entnahmerohr 37 abgenommen, und das Entnahmerohr 37 wird in den Schaft 14 des Kegelsitzventils 13 eingeführt. Nach einem gewissen Weg erreicht das Gehäuseende 33 das Federgehäuse 20 und wird darauf aufgeschoben. Hierdurch werden die Rastklinke 44 und die Sicherheitsklinke 46 durch wegdrücken der Steuerkante 74 in die in Fig. 1 dargestellte Stellung nach außen bewegt. Dies bewirkt bezüglich der Sicherheitsklinke 46 ein Entriegeln des Flansches 67, wodurch die axiale Verschiebbarkeit des Entnahmerohrs 37 freigegeben wird.

In der in Fig. 1 dargestellten Stellung ist der Axialdichtring 40 bereits zur Anlage an den Absatz 57 im Schaft 14 gelangt und bewirkt in Verbindung mit den O-Ring-Dichtungen 41 ein sicheres Abdichten des Entnahmerohrs 37 im Schaft 14.

Wird nun auf die Aufnahmeeinheit 2 ein zusätzlicher Axialdruck ausgeübt, der die Kraft der Feder 68 überwindet, wird das Gehäuse 32 relativ zum Entnahmerohr 37 verschoben. Dies bewirkt, daß sich die Rastklinke 44 ebenfalls axial verschiebt und in die Rastausnehmung 53 hineinfallen kann, vorausgesetzt die Rastklinke 44 befindet sich im Bereich des Axialschlitzes 52 im Sicherungskragen 6, was sich durch ein leichtes Drehen der Aufnahmeeinheit 2 auf einfache Weise bewerkstelligen läßt.

Mit dem Gehäuse 32 wird auch die Kolbenstange 62 über die zylindrische Buchse 58 und die durchbohrte Kappe 60 relativ zum Entnahmerohr 37 verschoben, so daß der Steuerkolben 63 gegen den Boden des Entnahmekopfes 38 bewegt wird und dadurch die Radialbohrungen 39 freigibt.

Infolge des Einrastens der Rastklinke 44 in die Rastausnehmung 53 bleibt die Aufnahmeeinheit 2 in der vorgeschobenen Stellung, ohne daß weiterer Druck ausgeübt werden muß. Durch das Einklinken der Rastklinke 44 in die Rastausnehmung 53 wird des weiteren eine drehfeste Kupplung zwischen der Aufnahmeeinheit 2 und dem Federgehäuse 20 bewirkt. Durch Drehen der Aufnahmeeinheit 2 mittels des Handrades 36 läßt sich nunmehr das Kegelsitzventil 13 öffnen, jedoch muß hierzu zunächst die Sperrklinke 27 durch Betätigen des Betätigungshebels 28 aus dem Zwischenraum 26 zwischen dem Flansch 5 und dem Federgehäuse 20 herausbewegt werden. Das Kegelsitzventil 13 läßt sich nunmehr durch Drehen der Aufnahmeeinheit 2 feinfühlig öffnen, so daß auch bei unter Druck stehenden Proben keine Verwirbelungen, Entmischungen oder sonstige Veränderungen an dem Probenmaterial eintreten. Durch das langsame Eindringen der Probe in die Aufnahmeeinheit 2 läßt sich die Probenmenge durch Beobachtung der Kolbenstange 50 und/oder des Fensters 35 einstellen.

Herrscht in der Rohrleitung, aus der die Probe entnommen wird, ein Unterdruck, läßt sich eine Probe ziehen, indem die Kolbenstange 50 mittels der Handhabe 51 herausgezogen wird.

Ist der Glaszylinder 77 gefüllt oder eine ausreichende Probemenge gezogen, wird das Kegelsitzventil 13 wieder geschlossen. Hierzu genügt es, das Handrad 36 loszulassen, da die Aufnahmeeinheit 2 mit dem gekuppelten Federgehäuse 20 durch die räumlich gewundene Biegefeder 22 im Gegenuhrzeigersinn in Schließstellung des Kegelsitzventils 13 gedreht wird. Zusätzlich läßt sich die Schließkraft erhöhen, indem die Aufnahmeeinheit 2 von Hand in Schließrichtung gedreht wird.

Nachdem an der Ventilsitzfläche 9 eine Abdichtung zum Produktraum erfolgt ist, befindet sich der Steuerkolben immer noch in der oberen, nicht gezeichneten Stellung; es besteht somit, zeitlich zum Abkuppelvorgang der Aufnahmeeinheit verzögert, eine Verbindung der Radialöffnungen 17, der Radialbohrungen 39 mit dem Glaszylinder 77. Die vorher abgeströmte Probe säubert durch Sogwirkung alle der Abdichtung zum Produktraum nachgeschalteten Benetzungsflächen. Die Probenahme wird damit völlig totraum- und troptenfrei durchgeführt. Umweltbelastende Emissionen durch in Hohlflächen oder Hohlräumen der Entnahmeelemente befindliche Tropfen sind ausgeschlossen, da das Entnahmerohr 37 an seinem Ende kegelförmig ausgebildet ist.

Während des Drehens ist es praktisch unmöglich, die Aufnahmeeinheit 2 durch Niederdrücken des Betätigungshebels 45 vom Federgehäuse 20 abzukuppeln, da der Sicherungskragen 6 außer im Bereich des Axialschlitzes 52 eine radiale Auswärtsbewegung des Rastklinkenarms 71 mit der Rastklinke 44 verhindert.

Ist das Kegelsitzventil 13 völlig geschlossen und befindet sich der Rastklinkenarm 71 mit der Rastklinke 44 im Bereich des Axialschlitzes 52, genügt es, den Betätigungshebel 45 in die in Fig. 1 gezeigte Stellung zu bringen, wodurch die Kupplung zwischen der Aufnahmeeinheit 2 und dem Federgehäuse 20 aufgehoben wird und sich die Aufnahmeeinheit 2 von der Ventileinheit 1 abziehen läßt. Beim Abziehen findet aber zunächst wieder eine Relativbewegung zwischen dem Entnahmerohr 37 und dem Gehäuse 32 bis in die in Fig. 1 dargestellte Stellung statt, wodurch die Radialbohrungen 39 mittels des Steuerkolbens 63 wieder verschlossen werden. Danach läßt sich die Aufnahmeeinheit 2 vollständig von der Ventileinheit 1 abziehen, ohne daß Probenreste in die Umgebung gelangen.

Nach dem vollständigen Verschließen des Kegelsitzventils 13 stellt sich wieder der Zwischenraum 26 zwischen dem Federgehäuse 20 und dem Flansch 5 der Ventilsitzbuchse 4 ein, in den die Sperrklinke 27 unter der Wirkung der Feder 29 automatisch einrastet. Damit ist die Sicherung gegen ein ungewolltes Öffnen des Kegelsitzventils 13 wieder wirksam.

Um die gezogene Probe in ein Laborgefäß zu bringen, wird das Entnahmerohr 37 mit dem Entnahmekopf 38 in eine entsprechende Aufnahme des Laborgefäßes eingesetzt. Die Sicherheitsklinke 46, die eine Axialverschiebung des Entnahmerohrs 37 relativ zum Gehäuse 32 verhindert, wenn die Aufnahmeeinheit 2 nicht an eine Ventileinheit 1 angesetzt ist, läßt sich durch Betätigen des Betätigungshebels 47 aufheben, so daß sich nunmehr wieder durch Verschieben des Entnahmerohrs 37 relativ zum Gehäuse 32 ein Öffnen der Radialbohrungen 39 durch Verschieben des Steuerkolbens 63 erreichen läßt. Durch Druck auf die Handhabe 51 wird nunmehr die Probe in das Laborgefäß entleert. Sollte nicht die gesamte gezogene Probenmenge benötigt werden, läßt sich das Entleeren in das Laborgefäß unterbrechen, indem der Druck auf die Aufnahmeeinheit 2 aufgehoben wird, wodurch das Entnahmerohr 37 und der Steuerkolben 63 wieder in die sich aus Fig. 1 ergebende Stellung gelangen. Der noch in der Aufnahmeeinheit 2 befindliche Probenrest läßt sich nunmehr wieder in die Rohrleitung zurückbefördern, indem eine Probennahme mit umgekehrter Reihenfolge der einzelnen Schritte durchgeführt wird.

## Patentansprüche

1. Probenahmevorrichtung aus einer in einer Rohrleitung oder einer Behälterwand angeordneten Ventileinheit (1) und einer damit verbundenen Aufnahmeeinheit (2) mit
- einer abgedichtet einseitig in der Rohrleitung oder der Behälterwand angeordneten Ventilsitzbuchse (4),
- einem mit einem hohlen Schaft (14) in der Ventilsitzbuchse (4) geführten Kegelsitzventil (13),
- einem in den hohlen Schaft (14) abgedichtet eingesetzten, mit einem Entnahmekopf (38) in den Bereich des Kegelsitzventils (13) reichenden Entnahmerohr (37) an der Aufnahmeeinheit (2) und
- einer Wirkverbindung (44; 53; 20; 22; 16) zwischen der Aufnahmeeinheit (2) und der Ventileinheit (1) zum Öffnen und Schließen des Kegelsitzventils (13) nach Einsetzen des Entnahmerohrs (37) in den Schaft (14) des Kegelsitzventils (13).

2. Probenahmevorrichtung nach Anspruch 1, gekennzeichnet durch eine Gewindeverbindung (16) zwischen dem Schaft (14) des Kegelsitzventils (13) und der Ventilsitzbuchse (4) sowie einer drehfesten Kupplung (44; 53; 20; 22; 16) zwischen dem Schaft (14) des Kegelsitzventils (13) und der Aufnahmeeinheit (2).

3. Probenahmevorrichtung nach Anspruch 2, gekennzeichnet durch eine in Richtung des Schließens wirkende Biegefederverbindung (22) zwischen der Ventilsitzbuchse (4) und dem Schaft (14) des Kegelsitzventils (13).

4. Probenahmevorrichtung nach Anspruch 3, gekennzeichnet durch eine in einem am Schaft (14) des Kegelsitzventils drehfest angeordneten Gehäuse (20) angeordnete, mit einem Ende (23) an der Ventilsitzbuchse (4) und mit dem anderen Ende (24) an dem Federgehäuse (20) angreifende, räumlich gewundene Biegefeder (22) und ein auf das Federgehäuse (20) aufsteckbares und verrastbares Gehäuseende (33) der Aufnahmeeinheit (2).

5. Probenahmevorrichtung nach Anspruch 4, dadurch gekennzeichnet, daß am Gehäuseende (33) eine federbeaufschlagte Rastklinke (44) und am Federgehäuse (20) eine Rastausnehmung (53) axial versetzt so angeordnet sind, daß das Einrasten erst erfolgt, wenn das Entnahmerohr (37) im Kegelsitzventil (13) an einem Absatz (57) dichtend anliegt und ein im Entnahmerohr (37) angeordneter Steuerkolben (63) durch axiales Verschieben der Aufnahmeeinheit (2) in eine Öffnung (39) im Entnahmekopf (38) freigebende Stellung gebracht ist.

6. Probenahmevorrichtung nach Anspruch 5, dadurch gekennzeichnet, daß die Ventilsitzbuchse (4) einen zylindrischen Sicherungskragen (6) mit einem gegenüber dem Außendurchmesser des zylindrischen Gehäuseendes (33) geringfügig größeren Innendurchmesser aufweist und im Sicherungskragen (6) eine Axialnut (52) oder ein Axialschlitz zur Aufnahme der Rastklinke (44) vor dem Einrasten in die Rastausnehmung (53) am Federgehäuse (20) angeordnet ist.

7. Probenahmevorrichtung nach einem der Ansprüche 1 bis 6, dadurch gekennzeichnet, daß das Entnahmerohr (37) gegen die Wirkung einer Feder (68) axial verschiebbar an der Aufnahmeeinheit (2) angeordnet ist, einen als Widerlager für die Feder (68) dienenden Flansch (67) besitzt und am Gehäuse (32) eine den Flansch (67) in der ausgefahrenen Ruhestellung des Entnahmerohrs (37) hintergreifende, federbeaufschlagte Sicherheitsklinke (46) angeordnet ist.

8. Probenahmevorrichtung nach einem der Ansprüche 1 bis 7, dadurch gekennzeichnet, daß an der Ventilsitzbuchse (4) eine federbeaufschlagte, das Öffnen des Kegelsitzventils (13) verhindernde Sperrklinke (27) angeordnet ist.

9. Probenahmevorrichtung nach den Ansprüchen 1 bis 8, dadurch gekennzeichnet, daß die Ventileinheit (1) aus einer in eine Rohrleitung oder in eine Behälterwand abgedichtet eingeschraubten Ventilsitzbuchse (4) mit einer kegeligen Ventilsitzfläche (9), einer sich daran anschließenden zylindrischen Führung (15) sowie einem Gewinde (16) und einem an einer Anflachung (19) der Rohrleitung oder des Behälters anliegenden Flansch (5) mit einem zylindrischen Sicherheitskragen (6), einem mit einem hohlen Schaft (14) in der zylindrischen Führung (15) geführten und in das Gewinde (16) eingeschraubten Kegelsitzventil (13) mit an der kegeligen Ventilsitzfläche (9) des Kegelsitzventils (13) angrenzenden in den hohlen Schaft (14) mündenden Radialöffnungen (17) und einem mit dem Schaft (14) drehfest verbundenen mit Abstand zum Flansch (5) angeordneten Federgehäuse (20) für eine mit einem Ende (23) an der Ventilsitzbuchse (4) und mit dem anderen Ende (24) am Federgehäuse (20) angreifende, räumlich gewundenen Biegefeder (22) besteht.

10. Probenahmevorrichtung nach Anspruch 9, dadurch gekennzeichnet, daß eine federbeaufschlagte Sperrklinke (27) in den Zwischenraum (26) zwischen dem Federgehäuse (20) und dem Flansch (5) ragt und ein von außen erreichbarer Betätigungshebel (28) im Bereich des Sicherungskragens (6) am Flansch (5) angeordnet ist.

11. Probenahmevorrichtung nach den Ansprüchen 1 bis 10, dadurch gekennzeichnet, daß die Aufnahmeeinheit (2) aus einem im wesentlichen zylindrischem Gehäuse (32) besteht, dessen eines Ende (33) auf das Federgehäuse (20) aufschiebbar ist und in dessen anderes Ende (34) eine zylindrische Buchse (58) mit einer abgedichteten Führung für das federbeaufschlagt axial verschiebbare Entnahmerohr (37) geschraubt ist, wobei der Weg des Entnahmerohrs (37) durch eine Anschlagfläche für einen Flansch (61) am Ende des Entnahmerohrs (37) in einer Vertiefung (59) der Buchse (58) und durch eine in die Vertiefung eingeschraubte durchbohrte Kappe (60) begrenzt ist sowie an der Kappe (60) eine den Steuerkolben (63) im Bereich des Entnahmekopfs (38) haltende Kolbenstange (62) angeordnet ist und sich das Entnahmerohr in einem zylindrischen, mit dem Entnahmerohr in Verbindung stehenden als Entnahmegefäß dienender Glaszylinder (77) mit darin angeordneten Kolben (79) und nach außen geführter Kolbenstange (50) mit einer Handhabe (51) fortsetzt.

12. Probenahmevorrichtung nach Anspruch 11, dadurch gekennzeichnet, daß am Gehäuse (32) ein Handrad (36) mittels Speichen (76) befestigt ist, die federbeaufschlagte Rastklinke (44) in einem Gehäuseschlitz (70) gelagert ist und ein dazu im wesentlichen rechtwinklig radial abstehender Betätigungshebel (45) in den Bereich des Handrads (36) ragt.

13. Probenahmevorrichtung nach Anspruch 11 oder 12, dadurch gekennzeichnet, daß zwischen der Buchse (58) und dem Flansch (67) eine Druckfeder (68) angeordnet ist und die den Flansch (67) hintergreifende Sicherheitsklinke (46) einen in den Bereich des Handrads (36) ragenden, federbeaufschlagten Betätigungshebel (47) aufweist.

14. Probenahmevorrichtung nach Anspruch 11, 12 oder 13, dadurch gekennzeichnet, daß das Entnahmerohr (37) eines durchmesserkleineren Entnahmekopfs (38) Radialbohrungen (39) aufweist, ein durch die Durchmesserverringerung gebildeter Absatz (82) dichtend an einen entsprechenden Absatz (57) im Ventilschaft (14) anlegbar ist und der Steuerkolben (63) zwischen einer die Radialbohrungen (39) verschließenden und einer diese freigebenden Stellung axial verschiebbar ist.

15. Probenahmevorrichtung nach Anspruch 11, 12, 13 oder 14, dadurch gekennzeichnet, daß der Glaszylinder (77) durch einen Boden (78) mit einer Durchführung für die Kolbenstange (50) verschlossen ist und der Boden (78) mittels einer verriegelbaren Überwurfmutter (48) am Glaszylinder (77) befestigt ist.

16. Probenahmevorrichtung nach den Ansprüchen 1 bis 12, dadurch gekennzeichnet, daß das Gehäuseende (34) ein oder mehrere Fenster (35) aufweist, wobei mindestens ein zweites Fenster, höchstens alle Fenster, zu einem gedachten Bezugspunkt angeordnet sein können.

## Claims

1. A sampling device comprising a valve unit (1) fitted in a pipeline or a container wall and a collecting unit (2) connected thereto, including
- a valve seat bushing (4) fitted sealingly on one side in the pipeline or the container wall,
- a cone valve (13) having a hollow shaft (14) guided in the valve seat bushing (4),
- a sampling tube (37) on the collecting unit (2) inserted sealingly in the hollow shaft (14) and having a sampling head (38) extending into the vicinity of the cone valve (13), and
- an operative linkage (44; 53; 20; 22; 16) between the collecting unit (2) and the valve unit (1) to open and close the cone valve (13) after insertion of the sampling tube (37) into the shaft (14) of the cone valve (13).

2. A sampling device according to claim 1, characterised by a screw threaded connection (16) between the shaft (14) of the cone valve (13) and the valve seat bushing (4) and by a torsion-resistant coupling (44; 53; 20; 22; 16) between the shaft (14) of the cone valve (13) and the collecting unit (2).

3. A sampling device according to claim 2, characterised by a coiled torsion spring connection (22), acting in the direction of closure, between the valve seat bushing (4) and the shaft (14) of the cone valve (13).

4. A sampling device according to claim 3, characterised by a spatially coiled torsion spring (22) fitted in a housing (20) carried in a torsion-resistant manner on the shaft (14) of the cone valve, with one end (23) engaging on the valve seat bushing (4) and with the other end (24) engaging on the spring housing (20), and by an end portion (33) of the housing of the collecting unit (2) which can be pushed over and locked on to the spring housing (20).

5. A sampling device according to claim 4, characterised in that a spring-loaded locking pawl (44) on the end portion (33) of the collecting unit housing and a locking recess (53) in the spring housing (29) are axially offset so that locking only occurs when the sampling tube (37) bears sealingly on a shoulder (57) in the cone valve (13) and a control piston (63) fitted in the sampling tube (37) has been brought by axial displacement of the collecting unit (2) into a position that unblocks an orifice (39) in the sampling head (38).

6. A sampling device according to claim 5, characterised in that the valve seat bushing (4) has a cylindrical safety collar (6) having an internal diameter slightly greater that the external diameter of the cylindrical end portion (33) of the collecting unit housing, and that in the safety collar (6) there is an axial groove (52) or an axial slot to receive the locking pawl (44) before latching into the locking recess (53) in the spring housing (20).

7. A sampling device according to one of claims 1 to 6, characterised in that the sampling tube (37) is fitted on the collecting unit (2) so as to be axially displaceable against the action of a spring (68) and has a flange (67) serving as abutment for the spring (68), and that a spring-loaded safety pawl (46) is fitted on the housing (32) which engages behind the flange (67) in the withdrawn, rest position of the collecting tube (37).

8. A sampling device according to any of claims 1 to 7, characterised in that a spring-loaded locking pawl (27) is fitted on the valve seat bushing (4) to prevent opening of the cone valve (13).

9. A sampling device according to any of claims 1 to 8, characterised in that the valve unit (1) comprises: a valve seat bushing (4) screwed sealingly into a pipeline or into a container wall and having a conical valve seating face (9); adjacent thereto a cylindrical guide (15) and a screw thread (16) and a flange (5) which fits against a flat (19) on the pipeline or the container and has a cylindrical safety collar (6); a cone valve (13) having a hollow shaft (14) guided in the cylindrical guide (15) and screwed into the screw thread (16) and having adjacent the conical valve seating face (9) of the cone valve (13) radial openings (17) leading into the hollow shaft (14); and a spring housing (20), connected non-rotatably to the shaft (14) and spaced from the flange (5), for a spatially coiled torsion spring (22) of which one end (23) engages with the valve seat bushing (4) and the other end (24) engages with the spring housing (20).

10. A sampling device according to claim 9, characterised in that a spring-loaded blocking pawl (27) projects into the space (26) between the spring housing (20) and the flange (5) and that an externally accessible operating lever (28) is fitted on the flange (5) in the vicinity of the safety collar (6).

11. A sampling device according to any of claims 1 to 10, characterised in that the collecting unit (2) comprises a substantially cylindrical housing (32) one end (33) of which can be pushed on to the spring housing (20) and in the other end (24) of which is screwed a cylindrical bushing (58) having a sealed guide for the spring-loaded axially displaceable sampling tube (37), the travel of the sampling tube (37) being limited by a stop face for a flange (61) at the end of the sampling tube (37) in a recess (59) in the bushing (58) and by a cap (60) with a through bore screwed into the recess, a piston rod (62) holding the control piston (63) in the vicinity of the sampling head (38) being fitted on the cap (60) and the sampling tube continuing in a cylindrical glass cylinder (77) connected to the sampling tube which serves as a collecting vessel and has a piston (79) fitted inside it with piston rod (50) with a grip (51) guided to the outside.

12. A sampling device according to claim 11, characterised in that a hand wheel (36) is secured on the housing (32) by means of spokes (76), that the spring-loaded locking pawl (44) is mounted in a slot (70) in the housing and that an operating lever (45) standing out radially substantially at right angles thereto projects into the vicinity of the hand wheel (36).

13. A sampling device according to claim 11 or claim 12, characterised in that a pressure spring (68) is fitted between the bushing (58) and the flange (67) and that the safety pawl (46) which engages behind the flange (67) is provided with a spring-loaded operating lever (47) which projects into the vicinity of the hand wheel (36).

14. A sampling device according to claim 11, 12 or 13, characterised in that the sampling tube (37) of a sampling head (38) of smaller diameter is provided with radial bores (39), that a shoulder (82) formed by the reduction in diameter can be applied sealingly on a corresponding shoulder (57) in the valve shaft (14), and that the control piston (63) can be moved axially between a position in which it blocks the radial bores (39) and one in which it unblocks them.

15. A sampling device according to claim 11, 12, 13 and 14, characterised in that the glass cylinder (77) is closed by a base (78) having a passage through it for the piston rod (50) and that the base (78) is secured to the glass cylinder (77) by means of a lockable cap nut (48).

16. A sampling device according to any of claims 1 to 12, characterised in that the end (34) of the collection unit housing is provided with one or more windows (35) of which at least a second window, and at most all the windows, can be adjusted to an imaginary reference point.

## Revendications

1. Dispositif de prélèvement d'échantillons constitué par une unité à soupape (1) disposée dans une conduite ou dans une paroi de réservoir et par une unité de prélèvement (2) reliée à celle-ci, ce dispositif comprenant :
- une douille à siège de soupape (4) qui est disposée d'un côté d'une manière étanche dans la conduite ou dans la paroi de réservoir,
- une soupape à siège conique (13) qui est guidée par une tige creuse (14) dans la douille à siège de soupape (4),
- un tube de prélèvement (37) qui est présent sur l'unité de prélèvement (2), qui est introduit d'une manière étanche dans la tige creuse (14) et qui arrive par une tête de prélèvement (38) dans la région de la soupape à siège conique (13), et :
- une liaison fonctionnelle (44 ; 53 ; 20 ; 22 ; 16) entre l'unité de prélèvement (2) et l'unité à soupape (1) pour ouvrir et fermer la soupape à siège conique (13) après l'introduction du tube de prélèvement (37) dans la tige (14) de la soupape à siège conique (13).

2. Dispositif de prélèvement d'échantillons selon la revendication 1, caractérisé par une liaison par filetage (16) entre la tige (14) de la soupape à siège conique (13) et la douille à siège de soupape (4), ainsi que par un accouplement fixe en rotation (44 ; 53 ; 20 ; 22 ; 16) entre la tige (14) de la soupape à siège conique (13) et l'unité de prélèvement (2).

3. Dispositif de prélèvement d'échantillons selon la revendication 2, caractérisé par une liaison par ressort de torsion (22) qui agit dans la direction de la fermeture entre la douille à siège de soupape (4) et la tige (14) de la soupape à siège conique (13).

4. Dispositif de prélèvement d'échantillons selon la revendication 3, caractérisé par un ressort de torsion (22) qui est enroulé dans l'espace, qui est disposé dans un logement (20) monté fixe en rotation sur la tige (14) de la soupape à siège conique et qui vient en prise avec la douille à siège de soupape (4) par une extrémité (23) et avec le logement de ressort (20) par l'autre extrémité (24), et caractérisé par une extrémité d'enveloppe (33) de l'unité de prélèvement (2) qui peut être enfoncée sur le logement de ressort (20) et qui peut être encliquetée.

5. Dispositif de prélèvement d'échantillons selon la revendication 4, caractérisé par le fait qu'un cliquet d'encliquetage (44) qui est rappelé par un ressort est disposé sur l'extrémité d'enveloppe (33), et qu'un évidement d'encliquetage (53) est ménagé dans le logement de ressort (20) en étant décalé dans le sens axial d'une manière telle que l'encliquetage ait lieu uniquement lorsque le tube de prélèvement (37) porte d'une manière étanche sur un épaulement (57) situé dans la soupape à siège conique (13) et qu'un piston de commande (63) disposé dans le tube de prélèvement (37) est amené par coulissement axial de l'unité de prélèvement (2) dans une position qui libère une ouverture (39) dans la tête de prélèvement (38).

6. Dispositif de prélèvement d'échantillons selon la revendication 5, caractérisé par le fait que la douille à siège de soupape (4) présente un collet de sécurité cylindrique (6) dont le diamètre intérieur est légèrement supérieur au diamètre extérieur de l'extrémité d'enveloppe cylindrique (33), et qu'une rainure axiale (52) ou une fente axiale est ménagée dans le collet de sécurité cylindrique (6) en vue de recevoir le cliquet d'encliquetage (44) avant l'encliquetage dans l'évidement d'encliquetage (53) du logement de ressort (20).

7. Dispositif de prélèvement d'échantillons selon l'une des revendications 1 à 6, caractérisé par le fait que le tube de prélèvement (37) est disposé sur l'unité de prélèvement (2) en pouvant coulisser axialement à l'encontre de l'effet d'un ressort (68), qu'il présente une bride (67) servant de butée au ressort (68), et qu'est disposé sur l'enveloppe (32) un cliquet de sécurité (46) qui est rappelé par un ressort et qui vient en prise par l'arrière avec la bride (67) dans la position de repos du tube de prélèvement (37) dans laquelle celui-ci est sorti.

8. Dispositif de prélèvement d'échantillons selon l'une des revendications 1 à 7, caractérisé par le fait qu'est disposé sur la douille à siège de soupape (4) un cliquet d'arrêt (27) qui est rappelé par un ressort et qui empêche l'ouverture de la soupape à siège conique (13).

9. Dispositif de prélèvement d'échantillons selon les revendications 1 à 8, caractérisé par le fait que l'unité à soupape (1) est constituée par une douille à siège de soupape (4) qui est vissée d'une manière étanche dans une conduite ou dans une paroi de réservoir et qui est pourvue d'une surface conique formant siège de soupape (9), par un guidage cylindrique (15) qui se raccorde à celle-ci et par un filetage (16), ainsi que par une bride (5) qui porte sur une partie plate (19) de la conduite ou du réservoir et qui présente un collet de sécurité cylindrique (6), par une soupape à siège conique (13) qui est guidée dans le guidage cylindrique (15) par une tige creuse (14), qui est vissée dans le filetage (16) et qui présente des ouvertures radiales (17) adjacentes à la surface conique formant siège de soupape (9) de la soupape à siège conique (13) et débouchant dans la tige creuse (14), et par un logement de ressort (20) qui est relié d'une manière fixe en rotation à la tige (14), qui est disposé à distance de la bride (5) et qui est destiné à un ressort de torsion enroulé dans l'espace (22), celui-ci venant en prise avec la douille à siège de soupape (4) par une extrémité (23) et avec le logement de ressort (20) à l'autre extrémité (24).

10. Dispositif de prélèvement d'échantillons selon la revendication 9, caractérisé par le fait qu'un cliquet d'arrêt (27) rappelé par un ressort fait saillie dans l'espace intermédiaire (26) qui est compris entre le logement de ressort (20) et la bride (5), et qu'un levier d'actionnement (28) que l'on peut atteindre depuis l'extérieur est disposé sur la bride (5) dans la région du collet de sécurité (6).

11. Dispositif de prélèvement d'échantillons selon les revendications 1 à 10, caractérisé par le fait que l'unité de prélèvement (2) est constituée par une enveloppe (32), pour l'essentiel cylindrique, dont une extrémité (33) peut être enfoncée sur le logement de ressort (20) et dans l'autre extrémité (34) de laquelle une douille cylindrique (58) est vissée par un guidage rendu étanche et destiné au tube de prélèvement (37) qui peut coulisser axialement et qui est rappelé par un ressort, cependant que le trajet du tube de prélèvement (37) est limité par une surface de butée qui est destinée à une bride (61) à l'extrémité du tube de prélèvement (37) dans un renfoncement (59) de la douille (58), et par un capuchon percé (60) qui est vissé dans le renfoncement, cependant qu'une tige de piston (62) qui maintient le piston de commande (63) dans la région de la tête de prélèvement (38) est disposée sur le capuchon (60), et que le tube de prélèvement se prolonge par un cylindre en verre cylindrique (77) qui est en communication avec le tube de prélèvement, qui sert d'enceinte de prélèvement et dans lequel sont disposés un piston (79) et une tige de piston (50), celle-ci étant amenée à l'extérieur et pourvue d'un organe de préhension (51).

12. Dispositif de prélèvement d'échantillons selon la revendication 11, caractérisé par le fait qu'un volant (36) est fixé à l'enveloppe (32) au moyen de rayons (76), que le cliquet d'encliquetage (44) qui est rappelé par un ressort est monté dans une fente (70) de l'enveloppe, et qu'un levier d'actionnement (45) fait saillie dans la région du volant (36) en s'étendant radialement et pour l'essentiel perpendiculairement au cliquet.

13. Dispositif de prélèvement d'échantillons selon la revendication 11 ou 12, caractérisé par le fait qu'un ressort de compression (68) est disposé entre la douille (58) et la bride (67), et que le cliquet de sécurité (46) qui vient en prise par l'arrière avec la bride (67) présente un levier d'actionnement (47) qui est rappelé par un ressort et qui fait saillie dans la région du volant (36).

14. Dispositif de prélèvement d'échantillons selon la revendication 11, 12 ou 13, caractérisé par le fait que le tube de prélèvement (37) présente dans une tête de prélèvement (38) de plus faible diamètre des perçages radiaux (39), qu'un épaulement (82) formé par la diminution du diamètre peut être appliqué d'une manière étanche sur un épaulement correspondant (57) ménagé dans la tige (14) de la soupape, et que l'on peut faire coulisser axialement le piston de commande (63) entre une position qui ferme les perçages radiaux (39) et une position qui les libère.

15. Dispositif de prélèvement d'échantillons selon la revendication 11, 12, 13 ou 14, caractérisé par le fait que le cylindre en verre (77) est fermé par un fond (78) qui est pourvu d'un passage destiné à la tige de piston (50), et que le fond (78) est fixé au cylindre en verre (77) au moyen d'un écrou-chapeau (48) qui peut être verrouillé.

16. Dispositif de prélèvement d'échantillons selon les revendications 1 à 12, caractérisé par le fait que l'extrémité d'enveloppe (34) présente une ou plusieurs fenêtres (35), cependant qu'au moins une deuxième fenêtre, et au maximum toutes les fenêtres, peuvent être disposées en un point de référence imaginaire.
